# EUROPÄISCHE PATENTSCHRIFT

(11) **EP 0 997 468 B1**
(45) Veröffentlichungstag und Bekanntmachung des Hinweises auf die Patenterteilung: **21.01.2004**
(21) Anmeldenummer: 99118741.0
(22) Anmeldetag: 22.09.1999
(51) Int. Cl.: C07F 7/20, C07F 7/18

(54) **Verfahren zur Neutralisation und Minderung von Resthalogengehalten in Alkoxysilanen oder Alkoxysilan-basierenden Zusammensetzungen**
Process for neutralising or reducing chlorine content of alkoxy silanes or alkoxysilane-based compositions
Procédé pour neutraliser ou diminuer le contenu de chlorure d'alkoxysilanes ou de compositions à base d'alkoxysilanes

(30) Priorität: 26.10.1998 DE 19849196
(43) Veröffentlichungstag der Anmeldung: 03.05.2000
(73) Patentinhaber: Degussa AG, 40474 Düsseldorf (DE)
(72) Erfinder: Laven, Ralf, Dr., 79739 Schwörstadt (DE); Löwenberg, Peter, 79618 Rheinfelden (DE); Kropfgans, Frank, Dr., 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Mack, Helmut, Dr., 79618 Rheinfelden (DE); Monkiewicz, Jaroslaw, Dr., 79618 Rheinfelden (DE); Standke, Burkhard, Dr., 79540 Lörrach (DE)

(56) Entgegenhaltungen:
- EP-A- 0 464 819
- GB-A- 1 115 052
- DATABASE WPI Section Ch, Week 199732 Derwent Publications Ltd., London, GB; Class A60, AN 1997-342735 XP002183620 & CN 1 107 852 A (NO 3 CHEM PLANT QUFU), 6. September 1995 (1995-09-06)

## Beschreibung

Die vorliegende Erfindung betrifft ein Verfahren zur Neutralisation und Minderung von Resthalogengehalten in Alkoxysilanen oder Alkoxysilan-basierenden Zusammensetzungen.

Alkoxysilane und Alkoxysilan-basierende Zusammensetzungen finden in vielen Bereichen Anwendung: Als Haftvermittler, Vernetzer in Polymeren, als Trennmittel, als Zusatzstoffe in Farben und Lacken, für die Hydrophobierung von Oberflächen, u. a. für Textilien, Leder und insbesondere für den Schutz von Bauten und Fassaden, für die Buchkonservierung, für die besondere Modifizierung der Eigenschaften von Oberflächen, wie die Beschichtung von Glasfasern oder die Silanisierung von Füllstoffen und Pigmenten, aber auch für die Verbesserung der rheologischen Eigenschaften von Polymerdispersionen und Emulsionen, um nur einige Beispiele zu nennen.

Für die Herstellung von Alkoxysilanen setzt man in der Regel Halogensilane, insbesondere Chlorsilane, ein. Beispielsweise erhält man durch Umsetzung eines Chlorpropyltrichlorsilans mit Methanol ein Chlorpropyltrimethoxysilan unter Freisetzung von HCl. Auch nach destillativer Reinigung des Produkts können Resthalogengehalte, d. h. insbesondere Restmengen an saurem bzw. hydrolysierbarem Chlorid im Alkoxysilan verbleiben. Ferner können auch Restmengen an sogenanntem nicht hydrolysierbarem Chlor im Produkt verbleiben, beispielsweise bei der Herstellung von Aminoalkylalkoxysilanen durch nicht umgesetzte Edukte, wie Chloralkylalkoxysilane.

Heutzutage ist man bestrebt, Alkoxysilane und Produkte, die Alkoxysilane enthalten, vgl. z. B. EP 0 273 867 B1, DE 27 51 714 C2, sowie Alkoxysilan-basierende Zusammensetzungen, wie sie beispielsweise aus den Schriften EP 0 049 365 A2, EP 0 518 057 A1, EP 0 675 128 A1, EP 0 716 127 A2 oder EP 0 716 128 A2, um nur einige zu nennen, hervorgehen, mit möglichst geringen Halogenidgehalten, insbesondere saure bzw. hydrolysierbare Chloride, herzustellen. Wesentliches Produktmerkmal ist auch die Farbe, angestrebt werden möglichst niedrige Gardner/APHA-Farbzahlen nach ISO 6271.

Es ist bekannt, den Resthalogengehalt unter anderem durch Umsetzung bzw. Neutralisation mit Alkalialkoholaten, wie z. B. Natriummethanolat und Abtrennen von dabei entstandenem Salz, aus Alkoxysilanen zu entfernen (EP 0 282 846 A2, EP 0 741 137 A1 ). Solche Neutralisationsverfahren weisen den Nachteil auf, daß bei dieser Umsetzung auch beachtliche Mengen Produkt zersetzt werden. Zersetzungsprodukte sind u. a. Siloxane, Tetraalkoxysilan, Anlagerungsprodukte, wie Methoxyethyltrimethoxysilane durch Reaktion von Natriummethylat und Vinytrimethoxysilan, Methoxypropyltrimethoxysilan gebildet aus Natriumethylat und Chlorpropyltrimethoxysilan, Methoxypropylmethyldimethoxysilane aus Natriummethylat und Chlorpropylmethyldimethoxysilan, oder im Falle einer Reaktion von Alkalimethylat und einem Alkyltrimethoxysilan auch das hoch toxische Tetramethoxysilan.

Ferner ist bei Anwendung gängiger Neutralisationsmittel, wie Alkalialkoholaten, oft auch eine Verschlechterung der Farbzahl des behandelten Alkoxysilans zu beobachten.

In den Schriften CN 11 07 85 1A und 11 07 85 2A sind Verfahren zur Herstellung von Vinyltriethoyxysilan und Chlorpropyltrimethoxysilan beschrieben, die durch Einsatz von Magnesiumalkoholaten sehr reine Produkte liefern sollen. Hierbei ist es von Nachteil, daß diese Alkoholate als sehr feuchtigkeitsempfindliche Produkte schwierig zu handhaben sind. Darüber hinaus liegen Magnesiumalkoholate in Pulverform vor und neigen zum Verklumpen, was wiederum die exakte Dosierung dieses Stoffs erschwert. Dieser Nachteil betrifft im besonderen die in der Praxis üblicherweise durchgeführte Dosierung in erwärmte oder heiße Produkte, weil das Silan oder andere flüchtige Bestandteile der Reaktionszubereitung auf den Magnesiumalkoholaten kondensieren, diese anlösen und damit in eine nicht mehr rieselfähige Form überführen.

Zur Vermeidung dieses Nachteils wurde versucht, alkoholische Lösungen der besagten Alkoholate einzusetzen. Dies ist jedoch mit dem Problem behaftet, daß beachtliche Mengen Alkohol in diesen Neutralisationschritt eingeschleust werden und unter Einsatz von Zeit und Energie wieder destillativ abgetrennt werden müssen. Zudem sind die Magnesiumalkoholate hochpreisig und in technischen Mengen nur bedingt verfügbar.

Der vorliegenden Erfindung lag die Aufgabe zugrunde, ein Verfahren bereitzustellen, das es ermöglicht, eine Minderung von aciden Restchlorgehalten einschließlich Neutralisation von Alkoxysilanen oder Alkoxysilane-basierenden Zusammensetzungen möglichst effektiv und produktschonend unter Verwendung kommerziell ausreichend verfügbarer und kostengünstiger Ausgangsprodukte durchzuführen.

Die gestellte Aufgabe wird erfindungsgemäß entsprechend den Angaben der Patentansprüche gelöst.

Überraschenderweise wurde gefunden, daß eine Neutralisation von Alkoxysilanen oder Alkoxysilan-basierenden Zusammensefzungen, die einen Restgehalt an acidem Chlorid aufweisen, durch Zugabe von metallischem Magnesium in Gegenwart geringer Mengen Alkohol erfolgt, ohne daß an sich zu erwartende Nebenreaktionen im Sinne einer Grignard-Synthese eintreten. Überraschend ist femer die besonders produktschonende Wirkung der Umsetzung, die selbst unter drastischeren Bedingungen, wie erhöhte Temperaturen und lange Reaktionszeiten, nicht zur Entstehung neuer Nebenprodukte führt. Die nach dem Neutralisationsschritt im Produkt vorliegenden Feststoffanteile, d. h. metallisches Magnesium und entstehendes Magnesiumchlorid, können in einfacher, in an sich bekannter Weise, z. B. durch Filtration, abgetrennt werden. Dabei werden vorteilhaft Produkte erhalten, deren Resthalogengehalte, insbesondere Restchloridgehalte, drastisch gemindert sind. Geringe Mengen an Alkohol im Produkt, z. B. bis 5 Gew.-%, stören im allgemeinen nicht, können aber, sofern gewünscht, destillativ entfernt werden.

So kann durch das vorgeschlagene Verfahren ein Verfahren bereitgestellt werden, das die Neutralisation und Minderung von acidem Resthalogenid, insbesondere Chlorid, in Alkoxysilanen oder in Alkoxysilan-basierenden Zusammensetzungen in einfacher, wirtschaftlicher, schonender und wirkungsvoller Weise ermöglicht.

Darüber hinaus wird bei Anwendung des erfindungsgemäßen Verfahrens in vorteilhafter und überraschender Weise auch gleichzeitig beobachtet, daß sich die Farbzahl behandelter Alkoxysilane und Alkoxysilan-basierender Zusammensetzungen nicht verschlechtert.

Gegenstand der vorliegenden Erfindung ist somit ein Verfahren zur Neutralisation und Minderung des Resthalogengehaltes in Alkoxysilanen oder in Alkoxysilan-basierenden Zusammensetzungen, das dadurch gekennzeichnet ist, daß man ein Alkoxysilan, das einen Restgehalt an acidem Halogenid aufweist, oder eine entsprechende Alkoxysilan-basierende Zusammensetzung in Gegenwart eines Alkohols mit metallischem Magnesium behandelt und anschließend die vorliegenden Feststoffe abtrennt.

Insbesondere handelt es sich bei den besagten Halogeniden um sogenannte hydrolysierbare, d. h. acide Chlorverbindungen, wie z. B. Chlorwasserstoff, Chlorsilane, Chloralkoxysilane einschließlich organofunktioneller Chlor- sowie Chloralkoxysilane.

Im allgemeinen führt man die erfindungsgemäße Behandlung derart durch, daß man dem Alkoxysilan oder der Alkoxysilan-basierenden Zusammensetzung Magnesium, vorzugsweise in Form von Spänen oder Pulver, zudosiert, gegebenenfalls etwas Alkohol zugibt und nachfolgend erwärmt.

Beim erfindungsgemäßen Verfahren können beispielsweise handelsübliche Magnesiumspäne der Firma Eckhart Non Ferrum (St. Georgen/A) vom Typ "Eckhart 100" oder "Almamet 150" eingesetzt werden. Geeigneterweise setzt man Magnesiumpulver oder -späne ein, wobei die durchschnittliche Teilchengröße vorzugsweise 20 µm bis 15 mm, besonders vorzugsweise 50 µm bis 10 mm, ganz besonders vorzugsweise 100 µm bis 1 mm, beträgt. Geeignet sind allerdings auch andere Magnesiumvarianten, z. B. Barren oder Band.

Geeigneterweise setzt man Magnesium im Überschuß ein. Vor der Zugabe des Magnesiums kann man dem zu behandelnden Alkoxysilan einen Alkohol zusetzen, beispielsweise Methanol, Ethanol, Isopropanol, Methoxyethanol oder Butanol. Geeigneterweise liegt beim erfindungsgemäßen Verfahren der Alkohol im Alkoxysilan vor, der mit dem Alkoxid des zu behandelnden Alkoxysilans korrespondiert. Sofern geringe Mengen an Alkchol im Alkoxysilan zugegen sind, kann man ein Lösemittel zugeben, beispielsweise aliphatische oder aromatische Kohlenwasserstoffe, Ether oder Ketone, das nach der Behandlung wieder aus dem Alkoxysilan zu entfernen ist. Man kann aber auch Alkohol im Überschuß einsetzen.

Vorteilhaft ist in der Regel die Zugabe von Alkohol, vorzugsweise in geringen Mengen, besonders vorzugsweise in einer Menge, die gerade ausreichend ist, überschüssiges Magnesium zu Magnesiumalkoholat abzureagieren.

Geeigneterweise liegt der.Gehalt an Alkohol im zu behandelnden Alkoxysilan zwischen 0,001 und 50 Gew.-%, vorzugsweise zwischen 0,01 und 30 Gew.-%, besonders vorzugsweise zwischen 0,1 und 20 Gew.-%, ganz besonders vorzugsweise zwischen 0,3 und 10 Gew.-%, jeweils bezogen auf das Alkoxysilan.

Bevorzugt führt man beim erfindungsgemäßen Verfahren die Behandlung in einem Temperaturbereich von 0 bis 200 °C, vorzugsweise von 10 bis 160°C, besonders vorzugsweise von 20 °C und dem Siedepunkt des entsprechenden Alkoxysilans, durch.

Man führt beim erfindungsgemäßen Verfahren die Behandlung vorzugsweise unter Druck durch. Vorteilhaft ist der Bereich von 0,02 bis 100 hPa.

Dabei kann eine Behandlungsdauer zwischen 1 Minute und 16 Stunden vorteilhaft sein, vorzugsweise von 2 Minuten bis 4 Stunden, besonders vorzugsweise von 5 bis 60 Minuten, wobei eine gute Durchmischung ebenfalls von Vorteil sein kann.

Zur weiteren Aufbereitung kann das Reinprodukt, insbesondere erfindungsgemäß behandelte Alkoxysilane, beispielsweise Vinyltrimethoxysilan, von der Produktmischung durch Destillation abgetrennt werden. Man kann auch das erfindungsgemäß behandelte Produkt einer gesonderten Destillation unterziehen. Geeigneterweise kann eine Filtration der nach erfindungsgemäßer Behandlung erhaltenen Produktmischung zur Abtrennung der festen Rückstände durchgeführt werden. Die Trennung kann aber auch durch Zentrifugieren erfolgen.

Geeigneterweise stellt man beim erfindungsgemäßen Verfahren den Resthalogenidgehalt, insbesondere den Gehalt an acidem Chlorid, in einem Alkoxysilan auf einen Wert von < 10 Gew.-ppm, vorzugsweise < 1 Gew.-ppm, d. h. geeigneterweise bis. hin zur Nachweisgrenze ein. Beispielsweise kann man durch Anwendung des erfindungsgemäßen Verfahrens den Gehalt an acidem Chlorid von rd. 20.000 Gew.-ppm auf einen Wert < 10 Gew.-ppm bis hin zur Nachweisgrenze absenken. In der Regel erzielt man jedoch beim erfindungsgemäßen Verfahren mindestens eine Minderung des Gehalts an acidem Halogenid von mehr als 30 %.

Das erfindungsgemäße Verfahren kann man beispielsweise - aber nicht ausschließlich - auf folgende Alkoxysilane oder Alkoxysilan-basierende Zusammensetzungen anwenden:

Vinyltrimethoxysilan, Vinyltriethoxysilan, Vinyl-tris(2-methoxy-ethoxy)silan, 3-Chlorpropyltrimethoxysilan, 3-Chlorpropyltriethoxysilan, 3-Chlorpropyl-methyldimethoxysilan, 3-Chlorpropyl-methyl-diethoxysilan, 3-Aminopropyltrimethoxysilansilan, 3-Aminopropyltriethoxysilan, 3-Aminopropyl-methyl-dimethoxysilan, 3-Aminopropyl-methyl-diethoxysilan, N-Amino-3-aminopropyl-methyl-dimethoxysilan, N-Aminoethyl-3-aminopropyl-methyl-diethoxysilan, 3-Methacryloxypropyl-trimethoxysilan, 3-Methacryloxypropyl-triethoxysilan sowie Perfluoralkyl- bzw. Fluoralkyl-funktionelle Alkoxysilane, wie 3,3,4,4,5,5,6,6,7,7,8,8,8-Tridecafluor-1,1,2,2-tetrahydrooctyltrimethoxysilan, 3,3,4,4,5,5,6,6,7,7,3,8.8-Tridecafluor-1,1,2,2-tetrahydrooctyltriethoxysilan, 3,3,4,4,5,5,6,6,7,7,8,8,9,9,-10,10,10-Heptadecafluor-1,1,2,2-tetrahydrodecyltrimethoxysilan, 3,3,4,4,5,5,-6,6,7,7,8,8, 9,9,10,10,10-Heptadecafluor-1,1,2,2-tetrahydrodecyltriethoxyilan sowie Zusammensetzungen oligomerer Organoalkoxysiloxane, z. B. solche mit oligomeren Vinylsiloxanen, wie DYNASYLAN® 6490, das, ausgehend von Vinyltrimethoxysilan, durch eine gezielte Kondensation hergestellt wird, oder DYNASYLAN® 6498, das durch gezielte Kondensation, ausgehend von Vinyltriethoxysilan, erhältlich ist, sowie Zusammensetzungen mit oligomeren Vinyl/Alkylsiloxanen, wie z. B. DYNASYLAN® 6598, wie insbesondere aus EP 0 518 957 A1 zu entnehmen ist, sowie Zusammensetzungen mit oligomeren Alkylalkoxysiloxanen, wie DYNASYLAN® 9281, vgl. DE 196 24 032 A1, sowie Zusammensetzungen wasserlöslicher, vorwiegend vollständig hydrolysierter Organopolysiloxane, wie insbesondere aus EP 0 675 128 A1, EP 0 716 127 A2 und EP 0 716 128 A2 hervorgeht.

Insbesondere ermöglicht die Anwendung des erfindungsgemäßen Verfahrens in vorteilhafter und überraschender Weise auch den Erhalt vorliegender guter Farbzahlen der zu behandelnden Alkoxysilane bzw. Alkoxysilan-basierenden Zusammensetzungen.

Die vorliegende Erfindung wird durch die nachfolgenden Beispiele näher erläutert:

### Beispiele

### Vergleichsbeispiel A

3.000 g Vinyltrimethoxysilan mit einem Gehalt an hydrolysierbarem Chlorid von 217 Gew.-ppm und einem Gehalt an Gesamtchlor von 231 Gew.-ppm und einer Farbzahl von 1 Gardner werden in einem Doppelmantelkolben mit 30 g einer 30%igen Natriummetylat-Lösung versetzt. Man erhält eine dunkelgelb gefärbte Lösung mit 8 Gardner. Anschließend wird das Gemisch mittels einer Destillation über einen Zeitraum von 4 Stunden destilliert. Im erhaltenen Destillat wird der Gehalt an hydrolysierbarem Chlorid von < 1 Gew.-ppm und ein Tetramethoxysilan-Gehalt von 600 Gew.-ppm ermittelt. Im dunkelbraunen Destillationsrückstand wird unter anderem als Hauptbestandteil das Zersetzungsprodukt Methoxyethyltrimethoxysilan gefunden.

### Vergleichsbeispiel B

3.388 g 3-Chlorpropyltrimethoxysilan mit einem Gehalt an hydrolysierbarem Chlorid von ca. 6.740 Gew.-ppm und einem Gehalt an Hochsiedem von ca. 3 % werden in einem Doppelmantelkolben mit 112 g einer 30%igen Natriummetylat-Lösung versetzt. Anschließend wird das Gemisch mittels einer Destillation über einen Zeitraum von 10 Stunden destilliert. Im erhaltenen Destillat wird der Gehalt an hydrolysierbarem Chlorid von 212 Gew.-ppm ermittelt. Die Rückstandsmenge stieg auf 11 Gew.-% Hochsieder, bezogen auf die Gesamtmenge, an.

### Vergleichsbeispiel C

100 g 3-Chlorpropylmethyldimethoxysilan mit einem Gehalt an hydrolysierbarem Chlorid von ca. 22.000 Gew.-ppm und einem Gehalt an Hochsiedern von ca. 1 % werden in einem Doppelmantelkolben mit 3 g Natriummetylat-Pulver versetzt. Das Gemisch wird über einen Zeitraum von 15 Stunden unter Rückfluß gekocht. Der Gehalt an Hochsiedern wird erneut ermittelt. Es wird ein Wert von 15 % gefunden.

### Vergleichsbeispiel D

100 g 3-Chlorpropylmethyldimethoxysilan mit einem Gehalt an hydrolysierbarem Chlorid von ca. 22.000 Gew.-ppm und einem Gehalt an Hochsiedern von ca. 1 % werden in einem Doppelmantelkolben mit 5 g Kalium-tert-butylat versetzt. Das Gemisch wird über einen Zeitraum von 15 Stunden unter Rückfluß gekocht. Der Gehalt an Hochsiedern steigt auf 17 %.

### Vergleichsbeispiel E

3.500 g 3-Chlorpropyltriethoxysilan mit einem Gehalt an hydrolysierbarem Chlorid von ca. 5.000 Gew.-ppm, einem Gehalt an Hochsiedern von ca.2 %, einem Ethanolgehalt von ca. 3 % und einer Farbzahl von < 1 Gardner werden in einem Doppelmantelkolben mit 168 g einer 20%igen Natriumethylatlösung versetzt und über einen Zeitraum von 2 Stunden unter Rückfluß erwärmt. Anschließend wird das Gemisch filtriert. Der Gehalt an hydrolysierbarem Chlorid von 50 Gew.-ppm wird ermittelt. Eine Zunahme an Hochsiedem auf ca. 12 % wird über GC-Chromatographie festgestellt. Die Farbzahl liegt bei < 4 Gardner.

### Beispiel 1

3.000 g Vinyltrimethoxysilan mit einem Gehalt an hydrolysierbarem Chlorid von 400 Gew.-ppm, einem Gesamtchlorgehalt von 416 Gew.-ppm, einem Gehalt an Divinyltetramethoxydisiloxan von ca. 1,5 Gew.-%, ca. 3 Gew.-% Methanol und einer Farbzahl von 1 Gardner werden in einem Doppelmantelkolben mit 5 g Magnesium-Pulver versetzt. Das Magnesium reagiert zu Magnesiumchlorid. Die Farbe der Zusammensetzung bleibt unverändert bei 1 Gardner. Anschließend wird das Gemisch mittels einer Destillation über einen Zeitraum von 8 Stunden destilliert. Im erhaltenen Destillat wird der Gehalt an hydrolysierbarem Chlorid von < 1 Gew.-ppm und ein Tetramethoxysilan-Gehalt von < 100 Gew.-ppm ermittelt. Der schwach gelbe Destillationsrückstand enthält keine zusätzlichen Mengen an Divinyltetramethoxydisiloxan. Methoxyethyltrimethoxysilan wurde nicht gefunden.

### Beispiel 2

3.500 g 3-Chlorpropyltrimethoxysilan mit einem Gehalt an hydrolysierbarem Chlorid von ca. 6.740 Gew.-ppm, einem Gehalt an Hochsiedem von ca. 3 % und einem Gehalt von ca 3 Gew.-% Methanol werden in einem Doppelmantelkolben mit 16,2 g Magnesium-Pulver versetzt (entspricht 100 % Mg-Überschuß, bezogen auf Chlorid). Das Magnesium reagiert zu Magnesiumchlorid. Anschließend wird das Gemisch mittels einer Destillation über einen Zeitraum von 8 Stunden destilliert. Im erhaltenen Destillat wird der Gehalt an hydrolysierbarem Chlorid von 38,3 Gew.-ppm ermittelt. Eine Zunahme an Hochsiedern konnte nicht festgestellt werden.

### Beispiel 3

3.500 g 3-Chlorpropylmethyldimethoxysilan mit einem Gehalt an hydrolysierbarem Chlorid von ca. 22.000 Gew.-ppm, einem Gehalt an Hochsiedem von ca. 3 % und einem Gehalt von ca 9 Gew.-% Methanol werden in einem Doppelmantelkolben mit 66 g Magnesiumspänen (Typ Almamet 150) versetzt (entspricht 100% Mg-Überschuß, bezogen auf Chlorid). Das Magnesium reagiert zu Magnesiumchlorid. Anschließend wird das Gemisch mittels einer Destillation über einen Zeitraum von 8 Stunden destilliert. Im erhaltenen Destillat wird der Gehalt an hydrolysierbarem Chlorid von 20 Gew.-ppm ermittelt. Eine Zunahme an Hochsiedem konnte nicht festgestellt werden.

### Beispiel 4

3.500 g 3-Chlorpropyltriethoxysilan mit einem Gehalt an hydrolysierbarem Chlorid von ca. 5.000 Gew.-ppm, einem Gehalt an Hochsiedem von ca. 2%, einem Ethanolgehalt von ca. 3 % und einer Farbzahl von < 1 Gardner werden in einem Doppelmantelkolben mit 17 g Magnesiumspänen (Typ Eckhart 100) versetzt und über einen Zeitraum von 2 Stunden unter Rückfluß erwärmt. Das Magnesium reagiert zu Magnesiumchlorid. Anschließend wird das Gemisch filtriert. Der Gehalt an hydrolysierbarem Chlorid von 50 Gew.-ppm wird ermittelt. Eine Zunahme an Hochsiedem konnte nicht festgestellt werden. Die Farbzahl liegt unverändert bei < 1 Gardner.

## Patentansprüche

1. Verfahren zur Neutralisation und Minderung des Resthalogengehaltes in Alkoxysilanen oder in Alkoxysilan-basierenden Zusammensetzungen,
**dadurch gekennzeichnet,**
**daß** man ein Alkoxysilan, das einen Restgehalt an acidem Halogenid aufweist, oder eine entsprechende Alkoxysilan-basierende Zusammensetzung in Gegenwart eines Alkohols mit metallischem Magnesium behandelt und anschließend die vorliegenden Feststoffe abtrennt.

2. Verfahren nach Anspruch 1,
**dadurch gekennzeichnet,**
**daß** man span- oder pulverförmiges Magnesium einsetzt.

3. Verfahren nach Anspruch 1 oder 2,
**dadurch gekennzeichnet,**
**daß** man das Magnesium im Überschuß einsetzt.

4. Verfahren nach mindestens einem der Ansprüche 1 bis 3,
**dadurch gekennzeichnet,**
**daß** man dem zu behandelten Alkoxysilan einen Alkohol zusetzt.

5. Verfahren nach mindestens einem der Ansprüche 1 bis 4,
**dadurch gekennzeichnet,**
**daß** der Gehalt an Alkohol zwischen 0,001 und 50 Gew.-%, bezogen auf das Alkoxysilan, liegt.

6. Verfahren nach mindestens einem der Ansprüche 1 bis 5,
**dadurch gekennzeichnet,**
**daß** der Alkohol im Alkoxysilan mit dem Alkoxid des zu behandelnden Alkoxysilans korrespondiert.

7. Verfahren nach mindestens einem der Ansprüche 1 bis 6,
**dadurch gekennzeichnet,**
**daß** man die Behandlung bei einer Temperatur von 0 bis 200 °C durchführt.

8. Verfahren nach mindestens einem der Ansprüche 1 bis 7,
**dadurch gekennzeichnet,**
**daß** man die Behandlung unter Druck durchführt.

9. Verfahren nach mindestens einem der Ansprüche 1 bis 8,
**dadurch gekennzeichnet,**
**daß** man die Behandlung für eine Dauer von 1 Minute bis 16 Stunden durchführt.

10. Verfahren nach mindestens einem der Ansprüche 1 bis 9,
**dadurch gekennzeichnet,**
**daß** man den Resthalogenidgehalt auf einen Wert von < 10 Gew.-ppm, bezogen auf das Alkoxysilan, bis hin zur Nachweisgrenze einstellt.

11. Verfahren nach Anspruch 1 bis 10,
**dadurch gekennzeichnet,**
**daß** das Halogen Chlor ist.

## Claims

1. A process for neutralizing and reducing the residual halogen content in an alkoxysilane or in an alkoxysilane-based composition, **characterized in that** it comprises treating an alkoxysilane which has a residual content of acidic halide, or a corresponding alkoxysilane-based composition, with metallic magnesium in the presence of an alcohol and subsequently separating off the solids present.

2. A process according to claim 1, **characterized in that** magnesium in the form of turnings or powder is used.

3. A process according to claim 1 or 2, **characterized in that** the magnesium is used in excess.

4. A process according to at least one of claims 1 to 3, **characterized in that** an alcohol is added to the alkoxysilane to be treated.

5. A process according to at least one of claims 1 to 4, **characterized in that** the alcohol content is between 0.001 and 50% by weight, based on the alkoxysilane.

6. A process according to at least one of claims 1 to 5, **characterized in that** the alcohol in the alkoxysilane corresponds with the alkoxide of the alkoxysilane to be treated.

7. A process according to at least one of claims 1 to 6, **characterized in that** the treatment is carried out at a temperature of from 0 to 200°C.

8. A process according to at least one of claims 1 to 7, **characterized in that** the treatment is carried out under pressure.

9. A process according to at least one of claims 1 to 8, **characterized in that** the treatment is carried out for a period of from 1 minute to 16 hours.

10. A process according to at least one of claims 1 to 9, **characterized in that** the residual halide content is set to a value of from < 10 ppm by weight, based on the alkoxysilane, down to the detection limit.

11. A process according to any of claims 1 to 10 **characterized in that** the halogen is chlorine.

## Revendications

1. Procédé de neutralisation et de réduction de la teneur résiduelle en halogène dans des alkoxysilanes ou dans des compositions à base d'alkoxysilanes,
**caractérisé en ce qu'**
on traite un alkoxysilane qui possède une teneur résiduelle en halogénure acide, ou une composition correspondante à base d'alkoxysilane, en présence d'un alcool avec du magnésium métallique et ensuite on sépare la matière solide qui se présente.

2. Procédé selon la revendication 1,
**caractérisé en ce qu'**
on met en oeuvre le magnésium sous forme de copeaux ou pulvérulente.

3. Procédé selon l'une quelconque des revendications 1 ou 2,
**caractérisé en ce qu'**
on utilise le magnésium en excès.

4. Procédé selon l'une quelconque des revendications 1 à 3,
**caractérisé en ce qu'**
on ajoute un alcool à l'alkoxysilane à traiter.

5. Procédé selon l'une quelconque des revendications 1 à 4,
**caractérisé en ce que**
la teneur en alcool se situe entre 0,001 et 50% en poids rapporté à l'alkoxysilane.

6. Procédé selon l'une quelconque des revendications 1 à 5,
**caractérisé en ce que**
l'alcool dans l'alkoxysilane correspond à l'alkoxyde de l'alkoxysilane à traiter.

7. Procédé selon l'une quelconque des revendications 1 à 6,
**caractérisé en ce qu'**
on effectue le traitement à une température allant de 0 à 200°C.

8. Procédé selon l'une quelconque des revendications 1 à 7,
**caractérisé en ce qu'**
on effectue le traitement sous pression.

9. Procédé selon l'une quelconque des revendications 1 à 8,
**caractérisé en ce qu'**
on effectue le traitement pendant une durée s'étendant de 1 minute à 16 heures.

10. Procédé selon l'une quelconque des revendications 1 à 9,
**caractérisé en ce qu'**
on ajuste la teneur résiduelle en halogénure à une valeur de < 10 ppm en poids, rapporté à l'alkoxysilane jusqu'à la limite de détection.

11. Procédé selon l'une quelconque des revendications 1 à 10,
**caractérisé en ce qu'**
l'halogène est du chlore.
